Europäisches Patentamt

European Patent Office

Office européen des brevets

(11) Veröffentlichungsnummer : **0 114 311**
**B1**

(12) **EUROPÄISCHE PATENTSCHRIFT**

(45) Veröffentlichungstag der Patentschrift :
27.05.87

(21) Anmeldenummer : 83112672.7

(22) Anmeldetag : 16.12.83

(51) Int. Cl.⁴ : **B 32 B 27/32**

(54) Siegelbare polyolefinische Mehrschichtfolie.

(30) Priorität : 24.12.82 DE 3247999

(43) Veröffentlichungstag der Anmeldung :
01.08.84 Patentblatt 84/31

(45) Bekanntmachung des Hinweises auf die Patenterteilung : 27.05.87 Patentblatt 87/22

(84) Benannte Vertragsstaaten :
BE DE FR GB IT

(56) Entgegenhaltungen :
DE-A- 2 814 311
DE-A- 2 941 140
GB-A- 2 076 741
US-A- 4 230 767

(73) Patentinhaber : HOECHST AKTIENGESELLSCHAFT
Postfach 80 03 20
D-6230 Frankfurt am Main 80 (DE)

(72) Erfinder : Janocha, Siegfried, Dr.
Am Hohen Stein 6
D-6200 Wiesbaden (DE)
Erfinder : Dietz, Wolfgang, Dr.
Armenruhstrasse 7a
D-6200 Wiesbaden (DE)
Erfinder : Bothe, Lothar, Dr.
Am Heiligenhaus 9
D-6500 Mainz-Gonsenheim (DE)
Erfinder : Crass, Günther
Bachstrasse 7
D-6204 Taunusstein 4 (DE)

**Beschreibung**

Die Erfindung betrifft eine siegelbare polyolefinische Mehrschichtfolie, bestehend aus einer Basisschicht aus einem Propylenpolymeren und aus mindestens einer siegelbaren Schicht, welche mindestens ein Propylencopolymeres, mindestens ein niedermolekulares Harz und mindestens ein Polydiorganosiloxan enthält.

Bei solchen Mehrschichtfolien kommt es sehr darauf an, daß sie ausgezeichnete Verarbeitbarkeit auf schnellaufenden Verpackungsmaschinen mit tadellosem Aussehen der so hergestellten Verpackungen vereinen.

Es ist bekannt, solche Mehrschichtfolien verschiedenen Aufbaus herzustellen.

Aus der DE-A-16 94 694 sind heißsiegelbare Schichtstoffe bekannt, die aus einer orientierten Polypropylenfolie bestehen, die mindestens eine heißsiegelfähige Schicht aus einem Ethylen-Propylen-Copolymeren aus 2 bis 6 Gew.-% Ethylen und 98 bis 94 Gew.-% Propylen enthält. Diese Folien besitzen erst bei höheren Temperaturen (> 130 °C) eine gute Heißsiegelbarkeit, sind nicht im erwünschten Maße kratzfest und zeigen zudem ungenügende Verarbeitungseigenschaften auf schnellaufenden Verpackungsmaschinen.

Aus der EP-B-27 586 sind siegelbare Polypropylenfolien bekannt, die eine Siegelschicht aus einem Ethylen-Homo- oder Copolymerisat besitzen, die mit einem langkettigen aliphatischen Amin, einer unverträglichen thermoplastischen Komponente und einem Polydialkylsiloxan ausgerüstet sind. Diese Folien stellen zwar eine Verbesserung im Vergleich zur DE-A-16 94 694 dar, weisen jedoch die gleiche hohe Siegeltemperatur auf und besitzen noch eine unzureichende Laufsicherheit auf horizontalen Form-Füll-Schließ-Maschinen.

Opake siegelbare Verpackungsfolien sind bekannt (DE-B-28 14 311 bzw. 4633) und werden wegen ihres werbewirksamen Aussehens (perlmuttartiger Glanz der Folienoberfläche) und der guten Bedruckbarkeit insbesondere zur Verpackung von Süßigkeiten, wie beispielsweise Schokoriegel, eingesetzt.

Von Nachteil sind bei den bekannten opaken Folien die relativ hohe Siegelanspringtemperatur von ca. 125 °C, wodurch zur Erzielung einer ausreichenden Siegelung Verarbeitungstemperaturen von 140 bis 150 °C erforderlich sind. Dies führt zur Beeinträchtigung des Füllgutes, wie Anlaufen bzw. Verfärbung der Schokolade. Außerdem sind die bekannten Folien nur mit unzureichenden Geschwindigkeiten auf schnellaufenden Verpackungsmaschinen verarbeitbar.

Aus der DE-A-29 41 140 ist ein Verpackungsmaterial bekannt, welches aus einer Grundschicht aus einem Polypropylenpolymerisat und aus einer Oberflächenschicht besteht, die aus einem Gemisch eines Propylen-Ethylen-Copolymerisats und eines $C_4$-$C_{10}$-α-Olefin-Propylen-Copolymerisats besteht. Diese Oberflächenschicht kann auch ein niedrigmolekulares thermoplastisches Harz sowie Silikonöle enthalten. Derartige Verpackungsmaterialien weisen den Nachteil auf, daß sie kratzempfindlich sind und noch unbefriedigende optische Eigenschaften besitzen.

Ferner beschreibt die Firma Mitsui Petrochemical Industries, Ltd. in ihrem Prospekt « TAFMER XR, Japan 82.03.1000.C1 » ein α-Olefin-Copolymeres, welches als Siegelschicht für Polypropylenfolien geeignet ist. Solche Polypropylenfolien mit Siegelschichten sind aber in mancherlei Hinsicht noch nicht befriedigend.

Keine der bekannten Mehrschichtfolien erfüllt gleichzeitig die für eine Verpackungsfolie wichtigen Eigenschaften großer Siegelbereich, niedrige Siegeltemperatur, hoher Glanz, geringe Kratzempfindlichkeit und gute Laufsicherheit auf schnellaufenden Verpackungsmaschinen unterschiedlichen Typs.

Ziel der vorliegenden Erfindung ist eine opake Folie mit einer niedrigen Siegelanspringtemperatur von unter 100 °C, einer geringen Reibung und einem perlmuttartigen Glanz der Folienoberfläche.

Die Folie soll außerdem auf konventionellen Biaxialstreckanlagen mit Walzenlängsstreckung hergestellt werden können und auf schnellaufenden Verpackungsmaschinen unterschiedlichen Typs gut verarbeitbar sein.

Dieses Ziel wurde erfindungsgemäß dadurch erreicht, daß bei einer siegelbaren polyolefinischen Mehrschichtfolie der eingangs genannten Art

A. die Siegelschicht aus einer Kombination von

a) 68,5 bis 89,7 Gew.-%, bezogen auf die siegelbare Schicht, einer Olefinharzzusammensetzung, bestehend aus einem Ethylen-Propylen-Butylen-Terpolymeren und einem Propylen-Butylen-Copolymeren entsprechend einem Gehalt von 0,1 bis 7 Gew.-% Ethylen, 53 bis 89,9 Gew.-% Propen und 10 bis 40 Gew.-% Butylen, bezogen auf die Olefinharzzusammensetzung,

b) 5 bis 15 Gew.-%, bezogen auf die siegelbare Schicht eines niedrigmolekularen, mit der Olefinharzzusammensetzung verträglichen Harzes.

c) 5 bis 15 Gew.-%, bezogen auf die siegelbare Schicht, eines Propylenhomopolymeren und

d) 0,3 bis 1,5 Gew.-%, bezogen auf die siegelbare Schicht, eines Polydiorganosiloxans besteht, und daß

B. die Basisschicht aus einem Propylenpolymeren mit einem Zusatz von 3 bis 15 Gew.-%, bezogen auf das Propylenpolymere, eines mit dem Polypropylenpolymeren unverträglichen Additivs besteht, und daß

C. der Quotient

$$\frac{\text{spezifisches Gewicht der Mehrschichtfolie nach der Verstreckung}}{\text{spezifisches Gewicht der Mehrschichtfolie vor der Verstreckung}}$$

kleiner als 0,9 ist.

Vorzugsweise enthält die Basisschicht ein anorganisches Additiv, insbesondere Calciumcarbonat, Siliziumdioxid und/oder ein Na-Al-Silikat.

Es kann aber ebenso vorteilhaft ein organisches unverträgliches Additiv in der Basisschicht enthalten sein, vorzugsweise Polystyrol, Polymethylmethacrylat, Polytetrafluorethylen und/oder Copolymere dieser Verbindungen.

Unverträglich bedeutet dabei, daß die polymere organische Komponente einen anderen Schmelzpunkt und/oder ein anderes natürliches Streckverhältnis als das Polypropylen aufweist, und daß es beim Streckprozeß zum Aufreißen der Polymermatrix und damit zur Vakuolenbildung kommt.

Vorteilhaft ist in der siegelbaren Schicht als niedrigmolekulares Harz ein Harz aus der Gruppe der Kohlenwasserstoffharze, Ketonharze, Polyamidharze, Kolophoniumharze, Dammarharze, der chlorierten aliphatischen und aromatischen Harze enthalten. Vorzugsweise ist als Komponente d) der siegelbaren Schicht ein Polydiorganosiloxan einer kinematischen Viskosität von mindestens 100 mm²/s bei 25 °C enthalten. Bevorzugt besitzt die biaxial gereckte Mehrschichtfolie eine Dicke von 10 bis 50 µm, besonders bevorzugt von 15 bis 40 µm.

Verwendung findet die erfindungsgemäße Mehrschichtfolie vor allem als Verpackungsfolie auf schnellaufenden Einschlagmaschinen.

Die Basisschicht der siegelbaren polyolefinischen Mehrschichtfolie besteht aus einem Propylenpolymeren, das zum überwiegenden Teil aus Propylen besteht und einen Schmelzpunkt von 140 °C oder höher, vorzugsweise einen Schmelzpunkt von 150 °C oder höher, besitzt.

Isotaktisches Polypropylen mit einem n-heptanlöslichen Anteil von 15 Gew.-% und weniger, Copolymere von Ethylen und Propylen mit einem Ethylengehalt von 10 Gew.-% oder weniger, Copolymere von Polypropylen mit $C_4$-$C_8$-$\alpha$-Olefinen mit einem $C_4$-$C_8$-$\alpha$-Olefingehalt von 10 Gew.-% oder weniger stellen spezielle Beispiele für das Polypropylenpolymere der Basisschicht dar.

Das Propylenpolymere der Basisschicht hat zweckmäßig einen Schmelzflußindex von 0,5 g/10 min bis 8 g/10 min bei 230 °C und 2,16 kp Belastung (DIN 53735), insbesondere von 1,5 g/10 min bis 4 g/10 min.

Die Basisschicht aus dem Propylenpolymeren kann zusätzlich übliche Zusatzmittel, wie z. B. Antistatika, Gleitmittel und Stabilisatoren, enthalten.

Die in den erfindungsgemäßen Mehrschichtenfolien enthaltene Olefinharzzusammensetzung der siegelbaren Schicht hat einen bei 20 °C p-xylollöslichen Anteil von 25 bis 70 Gew.-%, bevorzugt von 40 bis 60 Gew.-%. Der Schmelzpunkt der Olefinharzzusammensetzung liegt bei 130 °C oder höher. Die Olefinharzzusammensetzung hat einen Schmelzflußindex von 0,1 bis 16 g/10 min bei 230 °C und 2,16 kp Belastung (DIN 53735), insbesondere von 4 bis 10 g/10 min bei 230 °C und 2,16 kp Belastung.

Als besonders geeignet hat sich das Copolymere aus $\alpha$-Olefinen erwiesen, welches die Firma Mitsui Petrochemical Industries, Ltd. unter dem Namen TAFMER XR-106 L verkauft.

Bei dem erfindungsgemäß eingesetzten niedrigmolekularen, mit der Olefinharzzusammensetzung verträglichen Harz handelt es sich um ein natürliches oder synthetisches Harz. Das Harz hat einen Erweichungspunkt von 60 bis 180 °C (bestimmt nach DIN 1995-U4), bevorzugt von 80 bis 130 °C.

Unter verträglichen Harzen sind solche Harze zu verstehen, die, wenn sie als solche in einer Konzentration von bis zu 15 Gew.-% der Olefinharzzusammensetzung der Siegelschicht zugemischt werden, keine Verschlechterung der optischen Eigenschaften der Siegelschicht bewirken.

Als Beispiel für geeignete niedrigmolekulare, mit der Olefinharzzusammensetzung verträgliche thermoplastische Harze sind zu nennen Kohlenwasserstoffharze, Ketonharze, Polyamidharze, Kolophonium, Dammarharze, chlorierte aliphatische und aromatische Kohlenwasserstoffharze. Diese Harze werden in Ullmann, Encyclopädie der technischen Chemie, Band 12, 1976, Seiten 525 bis 555, beschrieben.

Unter « Kohlenwasserstoffharzen » sind Polymerisate, die vornehmlich aus Kohlenstoff und Wasserstoff bestehen, zu verstehen, deren Bestandteile beispielsweise aus Koksofengas, Kohlenteerdestillaten, bei Crackprozessen von Naphtha bzw. Gasöl und aus Terpentinöl gewonnen werden können. Als wesentliche Vertreter der Kohlenwasserstoffharze sind die Petroleumharze, die Harze aus Steinkohlenteer sowie die Terpentinharze zu nennen. Typische Beispiele der Kohlenwasserstoffharze stellen Cumaronharze, Erdölharze und Terpenharze dar. Diese Harze werden in obengenanntem Buch auf den Seiten 539 bis 546 beschrieben.

Cumaronharze werden meist durch Polymerisation von entphenolten und entbasten Fraktionen des Steinkohlenteerleichtöls, die beispielsweise Inden, Styrol, Dicyclopentadien und Cumaron und deren Homologe als ungesättigte Inhaltsstoffe enthalten, gewonnen. Durch Copolymerisation mit Phenol und Kombination mit anderen Kunststoffen ist eine vielseitige Modifikation möglich. Diese Harze werden in obengenanntem Buch auf den Seiten 545 bis 546 beschrieben.

Die Rohstoffbasis der Erdölharze wird bei der Crackung von Naphtha oder Gasöl auf Rohstoffe der chemischen Industrie, wie Ethylen, Propylen, gewonnen. Es handelt sich beispielsweise um harzbildende Verbindungen, wie Buten, Butadien, Penten, Piperylen, Isopren, Cyclopentadien, Dicyclopentadien, Alkylbenzole, Methyldicyclopentadien, Methylinden, Naphthalin, Styrol, Inden, Vinyltoluol, Methylstyrol. Diese Harze werden in obengenanntem Buch auf den Seiten 541 bis 542 beschrieben.

Bei Terpenharzen handelt es sich um Polymerisate von Terpenen. Als Beispiele für geeignete Terpene sind β-Pinen, Dipenten, Limonen, Myrcen, Bornylen, Camphen und ähnliche Terpene zu nennen. Diese Harze sind in obengenanntem Buch auf den Seiten 542 bis 543 beschrieben.

Hervorzuheben ist, daß die Kohlenwasserstoffe durch Reaktion der Rohstoffe vor der Polymerisation, durch Einführung spezieller Monomerer oder durch Reaktion des polymerisierten Produktes modifiziert werden können. Besonders hervorzuheben ist hierbei die Hydrierung oder Teilhydrierung ungesättigter Bestandteile der Harze. Möglichkeiten der Modifizierung von Kohlenwasserstoffharzen sind in obengenanntem Buch auf den Seiten 543 bis 544 beschrieben.

Bei Kolophonium handelt es sich um natürliche Harze, die durch Abdestillieren von Terpentinöl aus einem durch Lebendharzung von verschiedenen Kiefernarten gewonnenen Terpentinbalsam (Balsamharze), durch Lösungsmittelextraktion alter Wurzelstöcke (Wurzelharze) und durch fraktionierte Destillation von Tallöl (Tallharze) erhalten werden. Außerdem sollen darunter Kolophoniumester sowie modifiziertes Kolophonium (z. B. hydriertes, dehydriertes, fraktioniertes, isomerisiertes und disproportioniertes Kolophonium) und ähnliche Substanzen verstanden werden. Kolophonium wird in obengenanntem Buch auf den Seiten 529 bis 536 beschrieben.

Kondensatharze entstehen durch Säure-katalysierte Kondensation von Erdölfraktionen mit Aldehyden. Typische Vertreter sind Xylol-Formaldehyd-Harze und Naphthalin-Formaldehyd-Harze. Kondensationsharze werden in obengenanntem Buch auf Seite 542 beschrieben.

Dammarharze werden durch Lebendharzung von Bäumen der Familie Dipterocarpaicae gewonnen. Diese Harze sind im obengenannten Buch auf Seite 527 beschrieben.

Die Untergrenze von 5 Gew.-%, bezogen auf die siegelbare Schicht, des niedermolekularen, mit der Olefinharzzusammensetzung verträglichen Harzes sollte nicht unterschritten werden, da erst bei höheren Anteilen die Auswirkung des Harzzusatzes auf die optischen Eigenschaften und die Kratzempfindlichkeit in Erscheinung tritt.

Mehr als 15 Gew.-%, bezogen auf die siegelbare Schicht, an niedermolekularem, mit der Olefinharzzusammensetzung verträglichem Harz haben sich aus verfahrenstechnischen Gründen als unzweckmäßig erwiesen.

Das als Komponente c) der Siegelschicht eingesetzte Polypropylenhomopolymer sollte eine Schmelztemperatur, die oberhalb der Schmelztemperatur der Komponente a) liegt, besitzen. Bei Zusätzen von weniger als 5 Gew.-% an Polypropylenhomopolymeren ergeben sich nur geringfügige Verbesserungen der optischen Eigenschaften sowie der Kratzfestigkeit und noch nicht ausreichende Verbesserungen der Maschinengängigkeit an schnellaufenden Verpackungsmaschinen. Zusätze von mehr als 15 Gew.-% würden zwar die optischen Eigenschaften, die Kratzfestigkeit und die Maschinengängigkeit weiter verbessern, jedoch tritt dann eine merkliche Verschlechterung der Siegeleigenschaften ein.

Erfindungsgemäß können Polydiorganosiloxane oder deren Mischungen eingesetzt werden, die bei 25 °C eine Viskosität von mindestens 100 mm²/s aufweisen. Als Beispiele für geeignete Polydiorganosiloxane sind Polydialkylsiloxane, Polyalkylphenylsiloxane, olefinmodifizierte Siloxanöle, polyethermodifizierte Siliconöle, olefin/polyethermodifizierte Siliconöle, epoxymodifizierte Siliconöle und alkoholmodifizierte Siliconöle, Polydialkylsiloxane mit vorzugsweise C₁ bis C₄ in der Alkylgruppe, insbesondere Polydimethylsiloxane, hervorzuheben.

Weniger als 0,3 Gew.-%, bezogen auf die siegelbare Schicht an Polydiorganosiloxan sollten als Komponente d) nicht enthalten sein, da dies bei der beschriebenen Rohstoffkombination noch zu erhöhten Aussortierungen an den schnellaufenden Verpackungsmaschinen führt, während größere Mengen als 1,5 Gew.-%, bezogen auf die siegelbare Schicht, an Polydiorganosiloxan zu verfahrenstechnischen Schwierigkeiten bei der Folienherstellung und zu Fehleinschlägen in den Verpackungsmaschinen infolge zu geringer Reibung führen.

Eine Ausrüstung der siegelbaren Schicht mit üblichen Additiven, wie z. B. Gleitmittel, Antistatika und Stabilisatoren, ist möglich.

Die Dicke der Siegelschicht(en) sollte weniger als 3 μm, insbesondere weniger als 1 μm betragen, da sich bei größeren Schichtdicken das Verarbeitungsverhalten auf schnellaufenden Verpackungsmaschinen wieder verschlechtert.

Die Lösung der gestellten Aufgabe wird erreicht durch den Einsatz der erfindungsgemäßen Siegelschicht aus einer Kombination von vier Komponenten in Merkmal A sowie der Merkmale B und C entsprechend Anspruch 1.

Der große Siegelbereich und die niedrige Siegelanspringtemperatur werden durch die Olefinharzzusammensetzung erreicht. Die geringe Kratzempfindlichkeit ebenso wie die gute Optik werden durch die synergistisch wirkende Kombination von Propylenhomopolymer und niedrigmolekularem Harz erreicht, wobei erstaunlicherweise die Siegelung nicht verschlechtert wird, obwohl das reine Propylenhomopolymer nicht siegelbar ist. Die gute Verarbeitbarkeit ist auf das zugesetzte Polydiorganosiloxan in Verbindung mit dem im Vergleich zur Olefinharzzusammensetzung härteren Propylenhomopolymeren zurückzuführen. Weiterhin wird das Verkleben an den Walzen im Längsstreckbereich durch die Kombination der vier Komponenten nach Merkmal A von Anspruch 1 vermieden.

Die Grenzen von 68,5 bis 89,7 %, bezogen auf die siegelbare Schicht, an Olefinharzzusammensetzung a) finden ihre Begründung in dem Ansteigen der minimalen Siegeltemperatur und dem Abfall der Siegelfestigkeit bei geringeren Anteilen an Olefinharzzusammensetzung und dem Rückgang der positiven Effekte der erfindungsgemäßen Zusätze bei höheren Anteilen an Olefinharzzusammensetzung.

Durch eine Längsstreckung bei Temperaturen von etwa 110 bis 125 °C, die um ca. 10 bis 20 °C unter den üblichen Temperaturen bei der Walzenlängsstreckung von orientierten Polypropylenfolien liegen, wird eine Vakuolenstruktur erzeugt, die zu dem perlmuttartigen Glanz der Folienoberfläche führt. Dabei muß das spezifische Gewicht der Mehrschichtfolie auf unter 90 %, vorzugsweise auf 70 bis 85 %, des spezifischen Gewichts der Mehrschichtfolie vor dem Verstrecken absinken.

Der perlmuttartige werbewirksame Glanz wird durch die Vakuolenerzeugung (Aufreißen der Polymermatrix an den Korngrenzen der unverträglichen organischen bzw. anorganischen Additive in der Basisschicht) beim Längsstrecken und durch das zugesetzte niedermolekulare Harz in der Siegelschicht erreicht.

Die Beschichtung der Basisfolie mit der Siegelschicht erfolgt üblicherweise durch Koextrusion, wobei die optimale Schichtdicke der Siegelschicht(en) zu je etwa 0,8 bis 1,0 μm in der Endfolie ermittelt wurde. Größere Siegelschichtdicken führen zur Verschlechterung des Verarbeitungsverhaltens an schnelllaufenden Verpackungsmaschinen.

Extrusion und Querstreckung werden unter den üblichen Verfahrensbedingungen für Polypropylenfolien durchgeführt.

Sofern nicht ausdrücklich angegeben, wurden die einzelnen Daten nach folgenden Methoden ermittelt :

Schmelzflußindex — DIN 53735 bei 230 °C und 2,16 kp Belastung

Erweichungspunkt — DIN 1995-U4

Schmelzpunkt — DSC-Messung, Maximum der Schmelzkurve, Aufheizgeschwindigkeit 20 °C/min.

### Beispiel

Mit Hilfe des Koextrusionsverfahrens wurde aus einer Breitschlitzdüse von 280 mm Breite und 1,8 mm Spalthöhe bei einer Extrusionstemperatur von 260 °C und einer Fördermenge von 70 kg/h als Summe eine 1,3 mm dicke Mehrschichtfolie extrudiert, deren Basis aus Polypropylen mit einem Schmelzflußindex von 2 g/10 min bestand, das 10 Gew.-%, bezogen auf das Polypropylen, an Calciumcarbonat mit einem mittleren Durchmesser von 3 μm und mit einer Dichte von 2,7 g/cm$^3$ enthielt. Die beiden Siegelschichten bestanden aus

a) 79 Gew.-%, bezogen auf die Siegelschicht, einer Olefinharzzusammensetzung, die sich aus

$a_1$) 50 Gew.-% eines Ethylen-Propylen-Butylen-Terpolymeren, bestehend aus 1,4 Gew.-% Ethylen, 2,8 Gew.-% Butylen und 95,8 Gew.-% Propylen (jeweils bezogen auf das Terpolymere), sowie

$a_2$) 50 Gew.-% eines Propylen-Butylen-Copolymeren, bestehend aus 66,8 Gew.-% Propylen und 33,2 Gew.-% Butylen (bezogen jeweils auf das Copolymere),

zusammensetzte (es handelt sich um TAFMER XR-106 L), was einem Gehalt von 0,7 Gew.-% Ethylen, 81,3 Gew.-% Propylen und 18 Gew.-% Butylen, bezogen auf das TAFMER XR-106 L, entspricht. Die Olefinharzzusammensetzung $a_1$ + $a_2$ hatte einen Schmelzflußindex von 8 g/10 min und einen Schmelzpunkt von 150 °C ;

b) 10 Gew.-%, bezogen auf die Siegelschicht, von Arkon[R] P 125, einem hydrierten Kohlenwasserstoffharz mit einem Erweichungspunkt von 125 °C ;

c) 10 Gew.-%, bezogen auf die Siegelschicht, eines Propylen-Homopolymers mit einem Schmelzpunkt von 162 °C (Hostalen PPN 1060 F) ; und

d) 1 Gew.-%, bezogen auf die Siegelschicht, an Polydimethylsiloxan einer kinematischen Viskosität von 30 000 mm$^2$/s bei 25 °C.

Komponenten a, b, c und d waren homogen verteilt, als sie zur Herstellung der Mehrschichtfolie eingesetzt wurden.

Diese Folie wurde nach der Extrusion nach Durchlaufen einer 20 mm langen Luftstrecke auf einer 30 °C warmen Kühlwalze des Durchmessers 600 mm abgeschreckt, die mit einer Umfangsgeschwindigkeit von 4,5 m/min lief. Danach wurde die Folie von der Kühlwalze auf ein Walzentrio von ebenfalls 30 °C und einer Umfangsgeschwindigkeit von ebenfalls 4,5 m/min übergeben und dann nach Erwärmung auf 115 bis 120 °C von einem weiteren Walzentrio um den Faktor 5 längsgestreckt. Anschließend wurde sie bei 175 °C Lufttemperatur auf das 10fache in Querrichtung verstreckt.

In der Tabelle sind die minimale Siegeltemperatur und die Maschinenlaufeigenschaften auf einer vertikalen, einer horizontalen Formfüllschließmaschine sowie einer Einschlagmaschine aufgeführt.

Die Folie war 25 μm dick, das spezifische Gewicht betrug vor dem Verstrecken 1,07 $g/cm^3$ und nach dem Verstrecken 0,89 $g/cm^3$, entsprechend 0,83 nachher/vorher. Die Dicke der Siegelschichten betrug jeweils 0,9 μm.

### Vergleichsbeispiel

Beispiel 1 wurde wiederholt, jedoch mit einer Siegelschicht aus dem Ethylen-Propylen-Copolymerisat mit 4,5 % Ethylen ohne weitere Zusätze (Vergleich gegen DE-B-16 94 694 bzw. DE-B-28 14 311).

Diese Folie war wiederum 25 μm dick, die spezifischen Gewichte betrugen
1,08 $g/cm^3$ vor und
0,83 $g/cm^3$ nach dem Verstrecken, d. h. 0,77 nachher/vorher

Die Siegelschichtdicke betrug jeweils 0,7 μm.

### Tabelle : Folieneigenschaften

| Beispiel | Minimale (°C) Siegeltemperatur S1 + S2/2 | Maschinengängigkeit | | |
|---|---|---|---|---|
| | | vFFS- | hFFS- | Einschlag-Maschine |
| 1 | 90 | ++ | ++ | ++ |
| Vergl.-beispiel | 124 | ++ | - | - |

++ sehr gut < 2 %
+ gut < 5 %
± ausreichend < 10 %
- mangelhaft < 15 %
-- unbrauchbar ≥ 15 %
vFFS vertikale Form-Füll-Schließ-Maschine
hFFS horizontale Form-Füll-Schließ-Maschine

### Patentansprüche

1. Siegelbare polyolefinische Mehrschichtfolie, bestehend aus einer Basisschicht aus einem Propylenpolymeren und aus mindestens einer siegelbaren Schicht, welche mindestens ein Propylencopolymeres, mindestens ein niedermolekulares Harz und mindestens ein Polydiorganosiloxan enthält, dadurch gekennzeichnet, daß

A. die Siegelschicht aus einer Kombination von

a) 68,5 bis 89,7 Gew.-%, bezogen auf die siegelbare Schicht, einer Olefinharzzusammensetzung, bestehend aus einem Ethylen-Propylen-Butylen-Terpolymeren und einem Propylen-Butylen-Copolymeren entsprechend einem Gehalt von 0,1 bis 7 Gew.-% Ethylen, 53 bis 89,9 Gew.-% Propen und 10 bis 40 Gew.-% Butylen, bezogen auf die Olefinharzzusammensetzung,
b) 5 bis 15 Gew.-%, bezogen auf die siegelbare Schicht, eines niedrigmolekularen, mit der Olefinharzzusammensetzung verträglichen Harzes,
c) 5 bis 15 Gew.-%, bezogen auf die siegelbare Schicht, eines Propylenhomopolymeren und
d) 0,3 bis 1,5 Gew.-%, bezogen auf die siegelbare Schicht, eines Polydiorganosiloxans besteht, und daß

B. die Basisschicht aus einem Propylenpolymeren mit einem Zusatz von 3 bis 15 Gew.-%, bezogen auf das Propylenpolymere, eines mit dem Polypropylenpolymeren unverträglichen Additivs besteht, und daß

C. der Quotient

6

$$\frac{\text{spezifisches Gewicht der Mehrschichtfolie nach der Verstreckung}}{\text{spezifisches Gewicht der Mehrschichtfolie vor der Verstreckung}}$$

Kleiner als 0,9 ist.

2. Mehrschichtfolie nach Anspruch 1, dadurch gekennzeichnet, daß sie ein anorganisches unverträgliches Additiv enthält.

3. Mehrschichtfolie nach einem der Ansprüche 1 und 2, dadurch gekennzeichnet, daß sie als Additiv Calciumcarbonat, Siliziumdioxid und/oder ein Na-Al-Silikat enthält.

4. Mehrschichtfolie nach Anspruch 1, dadurch gekennzeichnet, daß sie ein organisches unverträgliches Additiv enthält.

5. Mehrschichtfolie nach Anspruch 4, dadurch gekennzeichnet, daß sie als Additiv Polystyrol, Polymethylmethacrylat, Polytetrafluorethylen und/oder Copolymere dieser Verbindungen enthält.

6. Mehrschichtfolie nach einem der Ansprüche 1 bis 5, dadurch gekennzeichnet, daß als Komponente b) der siegelbaren Schicht mindestens ein niedrigmolekulares Harz aus der Gruppe der Kohlenwasserstoff-, der Keton-, Polyamid-, Kolophonium-, Dammarharze und chlorierten aliphatischen und aromatischen Harze enthalten ist.

7. Mehrschichtfolie nach einem der Ansprüche 1 bis 6, dadurch gekennzeichnet, daß als Komponente d) der siegelbaren Schicht ein Polyorganosiloxan einer kinematischen Viskosität von mindestens 100 mm²/bei 25 °C enthalten ist.

8. Mehrschichtfolie nach einem der Ansprüche 1 bis 7, dadurch gekennzeichnet, daß das spezifische Gewicht der Folie nach dem Verstrecken 60 bis 89 %, insbesondere 70 bis 85 %, des spezifischen Gewichts der Folie vor dem Verstrecken beträgt.

9. Mehrschichtfolie nach Ansprüchen 1 bis 8, dadurch gekennzeichnet, daß die Mehrschichtfolie biaxial gereckt worden ist und eine Dicke von 10 bis 50 µm, vorzugsweise 15 bis 40 µm besitzt.

10. Mehrschichtfolie nach Ansprüchen 1 bis 9, dadurch gekennzeichnet, daß die Siegelschichtdicke kleiner als 3 µm, vorzugsweise kleiner als 1 µm ist.

11. Verwendung der Mehrschichtfolien nach Ansprüchen 1 bis 10 als Verpackungsfolie auf schnellaufenden Verpackungsmaschinen.

## Claims

1. Sealable polyolefinic multilayer film, comprising a base layer comprised of a propylene polymer and at least one sealable layer containing at least one propylene copolymer, at least one low-molecular weight resin and at least one polydiorganosiloxane, wherein

A. the sealing layer comprises a combination of

a) from 68.5 to 89.7 % by weight, based on the weight of the sealable layer, of an olefin resin composition, comprising an ethylene-propylene-butylene terpolymer and a propylene-butylene copolymer, corresponding to a content of from 0.1 to 7 % by weight of ethylene, 53 to 89.9 % by weight of propylene and 10 to 40 % by weight of butylene, based on the weight of the olefin resin composition,

b) from 5 to 15 % by weight, based on the weight of the sealable layer, of a low-molecular weight resin, which is compatible with the olefin resin composition,

c) from 5 to 15 % by weight, based on the weight of the sealable layer, of a propylene homopolymer, and

d) from 0.3 to 1.5 % by weight, based on the weight of the sealable layer, of a polydiorganosiloxane ;

B. the base layer comprises a propylene polymer containing from 3 to 15 % by weight, based on the weight of the propylene polymer, of an additive which is incompatible with the polypropylene polymer, and

C. the quotient

$$\frac{\text{specific gravity of the multilayer film after stretching}}{\text{specific gravity of the multilayer film before stretching}}$$

is less than 0.9.

2. A multilayer film as claimed in Claim 1, further comprising an inorganic incompatible additive.

3. A multilayer film as claimed in Claim 1 or 2, wherein said additive comprises calcium carbonate, silicon dioxide and/or an Na-Al silicate.

4. A multilayer film as claimed in Claim 1, comprising an organic incompatible additive.

5. A multilayer film as claimed in Claim 4, wherein said additive comprises polystyrene, polymethyl methacrylate, polytetrafluoroethylene and/or a copolymer of these compounds.

6. A multilayer film as claimed in any of Claims 1 to 5, wherein component b) of the sealable layer comprises at least one low-molecular weight resin selected from the group consisting of hydrocarbon resins, ketone resins, polyamide resins, colophonium resins, dammar resins and chlorinated aliphatic and aromatic resins.

7. A multilayer film as claimed in any of Claims 1 to 6, wherein component d) of the sealable layer comprises a polydiorganosiloxane which has a kinematic viscosity of at least 100 mm$^2$/s at 25 °C.

8. A multilayer film as claimed in any of Claims 1 to 7, wherein the specific gravity of the film after stretching is from 60 to 89 %, in particular from 70 to 85 %, of the specific gravity of the film before stretching.

9. A multilayer film as claimed in any of Claims 1 to 8, wherein the multilayer film has been biaxially stretched and has a thickness from 10 to 50 μm, preferably from 15 to 40 μm.

10. A multilayer film as claimed in any of Claims 1 to 9, wherein the sealing layer has a thickness of less than 3 μm, preferably of less than 1 μm.

11. Use of the multilayer films as claimed in any of Claims 1 to 10 as packaging films in high-speed packaging machines.

## Revendications

1. Feuille multicouches polyoléfinique soudable, composée d'une couche de base en un polymère de propylène et d'au moins une couche soudable, laquelle contient au moins un copolymère de propylène, au moins une résine à faible poids moléculaire et au moins un polydiorganosiloxane, caractérisée en ce que

A. La couche de soudage est constituée d'une combinaison de

a) 68,5 à 89,7 % en poids, par rapport à la couche soudable, d'une composition de résine oléfinique, constituée d'un terpolymère éthylène/propylène/butylène et d'un copolymère propylène/butylène, correspondant à une teneur de 0,1 à 7 % en poids en éthylène, 53 à 89,9 % en poids en propylène et 10 à 40 % en poids en butylène, par rapport à la composition de résine oléfinique,

b) 5 à 15 % en poids, par rapport à la couche soudable, d'une résine à faible poids moléculaire, compatible avec la composition de résine oléfinique,

c) 5 à 15 % en poids, par rapport à la couche soudable, d'un homopolymère de propylène, et

d) 0,3 à 1,5 % en poids, par rapport à la couche soudable, d'un polydiorganosiloxane, et en ce que

B. La couche de base est constituée d'un polymère de propylène, additionné de 3 à 15 % en poids, par rapport au polymère de propylène, d'un additif incompatible avec le polymère polypropylène, et en ce que

C. Le rapport

$$\frac{\text{poids spécifique de la feuille multicouches après l'étirage}}{\text{poids spécifique de la feuille multicouches avant l'étirage}} \text{ est inférieur à 0,9.}$$

2. Feuille multicouches selon la revendication 1, caractérisée en ce qu'elle contient un additif inorganique incompatible.

3. Feuille multicouches selon l'une des revendications 1 et 2, caractérisée en ce qu'elle contient en tant qu'additif du carbonate de calcium, du bioxyde de silicium et/ou un silicate de Na et Al.

4. Feuille multicouches selon la revendication 1, caractérisée en ce qu'elle contient un additif organique incompatible.

5. Feuille multicouches selon la revendication 4, caractérisée en ce qu'elle contient en tant qu'additif du polystyrène, du polyméthacrylate de méthyle, du polytétrafluoroéthylène et/ou des copolymères de ces composés.

6. Feuille multicouches selon l'une des revendications 1 à 5, caractérisée par le fait qu'en tant que composant b) de la couche soudable, est contenue au moins une résine à faible poids moléculaire, choisie parmi des résines hydrocarbonées, des résines cétoniques, des résines polyamide, des résines de colophane, des résines dammar et des résines chlorées aliphatiques et aromatiques.

7. Feuille multicouches selon l'une des revendications 1 à 6, caractérisée en ce que la couche soudable contient en tant que composant d) un polyorganosiloxane ayant une viscosité cinématique d'au moins 100 mm$^2$/s à 25 °C.

8. Feuille multicouches selon l'une des revendications 1 à 7, caractérisée en ce que le poids spécifique de la feuille après l'étirage représente 60 à 89 %, en particulier 70 à 85 % du poids spécifique de la feuille avant l'étirage.

9. Feuille multicouches selon les revendications 1 à 8, caractérisées en ce que la feuille multicouches a été étirée biaxialement et a une épaisseur de 10 à 50 $\mu$m, de préférence de 15 à 40 $\mu$m.

10. Feuille multicouches selon les revendications 1 à 9, caractérisée en ce que l'épaisseur de la couche de soudage est inférieure à 3 $\mu$m, de préférence inférieure à 1 $\mu$m.

11. Utilisation de la feuille multicouches selon les revendications 1 à 10, en tant que feuille d'emballage utilisée sur des matériels de conditionnement à grande vitesse.